# EUROPEAN PATENT SPECIFICATION

(11) **EP 1 951 796 B1**
(45) Date of publication and mention of the grant of the patent: **12.08.2009**
(21) Application number: 06826734.3
(22) Date of filing: 26.10.2006
(51) Int. Cl.: C08K 3/26, C09D 7/12, D21H 19/38, D21H 21/52

(54) **CALCIUM CARBONATE MARKING FLUID RECEPTORS**
CALCIUMCARBONAT-MARKIERUNGSFLÜSSIGKEITSREZEPTOREN
RECEPTEURS DE FLUIDE DE MARQUAGE EN CARBONATE DE CALCIUM

(30) Priority: 27.10.2005 US 260335
(43) Date of publication of application: 06.08.2008
(73) Proprietor: HEWLETT-PACKARD DEVELOPMENT COMPANY, L.P., Houston TX 77070 (US)
(72) Inventor: SEN, Radha, San Diego, CA 92127-1899 (US); MCMANUS, Richard, J., Corvallis, Oregon 97330 (US)
(74) Representative: Jackson, Richard Eric
(86) International application number: PCT/US2006/041786
(87) International publication number: WO 2007/050759

(56) References cited:
- WO-A-02/066739
- WO-A-20/05103377
- GB-A- 2 028 832

## Description

### BACKGROUND

In a typical inkjet recording or printing system, droplets of marking fluid are ejected from a nozzle towards a recording substrate, or medium, to produce an image on the medium. The droplets generally include a marking material, such as one or more dyes or pigments, for marking the medium, and some aqueous or solvent-based carrier vehicle to facilitate controlled ejection of the marking material. The medium is generally coated with a receptor to aid binding of the marking material to the medium and to aid dissipation of the carrier vehicle to reduce the likelihood of smearing or bleeding of the wet marking fluid. Such receptors can be a significant factor in the cost and/or performance of the medium in reproducing a desired image.

### SUMMARY OF INVENTION

The present invention provides a marking fluid receptive coating (308) comprising ground calcium carbonate, wherein the ground calcium carbonate forms agglomerates having a d50 value for agglomerates particle size of less than 200nm.

The present invention further provides a method of forming a marking fluid receptive coating (308) composition, comprising: milling a calcium carbonate feed material in a dispersion; adding an amount of surfactant to the dispersion that is at a level less than a surfactant demand of the dispersion; and combining the milled dispersion with a binder.

### BRIEF DESCRIPTION OF THE DRAWINGS

Figures 1A-1C are micrographs of three example calcium carbonate feed materials for use with various embodiments of the disclosure.

Figures 2A-2C are micrographs of the feed materials of Figures 1A-1C, respectively, after milling in accordance with embodiments of the disclosure.

Figure 3 is a cross sectional view of a print media in accordance with an embodiment of the disclosure.

Figure 4 illustrates an imaging device for demonstrating another embodiment of the disclosure.

### DETAILED DESCRIPTION

In the following detailed description of the present embodiments, reference is made to the accompanying drawings that form a part hereof, and in which is shown by way of illustration specific embodiments of the disclosure which may be practiced. These embodiments are described in sufficient detail to enable those skilled in the art to practice the subject matter of the disclosure, and it is to be understood that other embodiments may be utilized and that process, chemical or mechanical changes may be made without departing from the scope of the present disclosure.

The various embodiments involve marking fluid receptors, methods of their manufacture: and use, and media produced using such receptors. The receptive coatings of the various embodiments utilize calcium carbonate (CaCO₃) having controlled sizing of primary particles and their agglomeration.

Pigments used in microporous marking fluid receptive coatings for photo printing at the current time generally include fumed silica and alumina, which produce a glossy and receptive coating, but are generally of high cost and can add significantly to the cost of the media. Prior attempts to produce lower cost high-gluss media have used precipitated calcium carbonate or ground calcium carbonate on a paper base, followed by the developing of gloss on the surface by using a casting drum or calendaring process. However, such glossed coatings are generally opaque and can lead to a washed out appearance with dye-based inks. The process of calendering also tends to close the open pore structure, thereby leading to slower absorption rates. The process of cast coating reduces the closing of the pore. However, the process of casting is also generally slow and difficult to control.

The various embodiments utilize calcium carbonate at controlled particle sizing and agglomeration to produce a generally transparent marking fluid receptor with high gloss characteristics. The embodiments can utilize commodity, low cost raw material and common dispersion processes to generate microporous coatings suitable for photo printing applications. The agglomerates form an open pore structure mimicking fumed silica or alumina and can be formulated with binders to form clear and glossy marking fluid receptive coatings.

The various embodiments are not generally dependent upon the grace of calcium carbonate utilized and were demonstrated using a variety of calcium carbonate feed materials, including both ground calcium carbonate (GCC) and precipitated calcium carbonate (PCC). The various embodiments were further demonstrated starting with both slurry and powder feeds. For one embodiment, the particle size of the incoming calcium carbonate feed material is ground to have primary particle sizing of 10-30nm forming agglomerates of 50-200nm. For a further embodiment, the agglomerates are formed by controlled surfactant depletion flocculation during the grinding process.

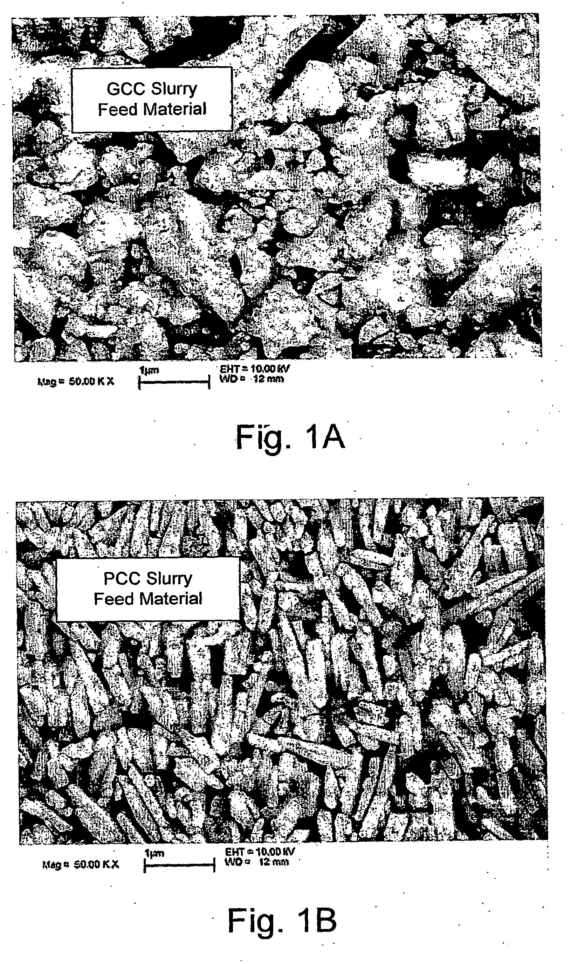

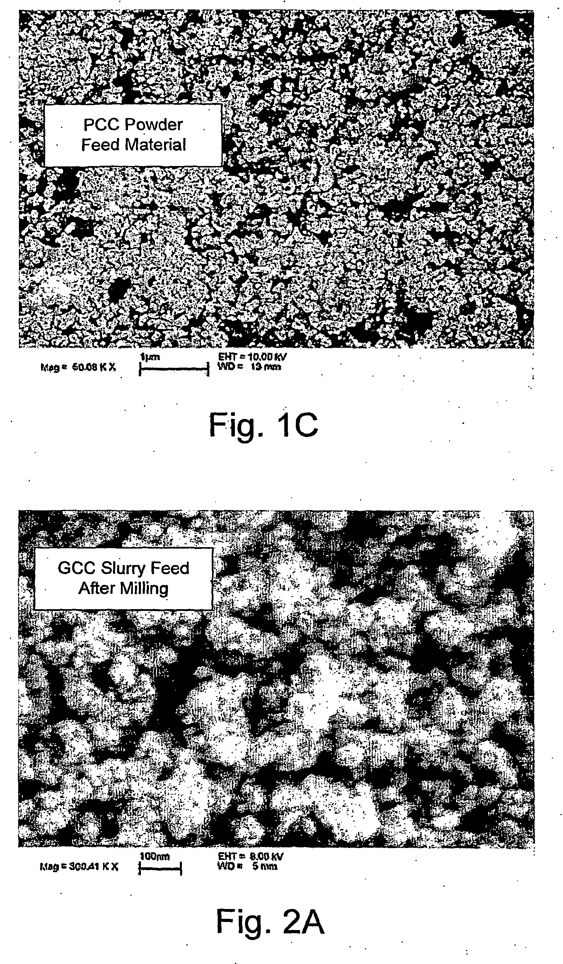

Figures 1A-1C are micrographs of three example calcium carbonate feed materials for use with various embodiments of the disclosure. Agglomerate particle size was measured using a laser scattering device such as a Microtrac^{®} S3000, available through Microtrac, Inc., Montgomeryville, Pennsylvania, USA or a Horiba LA-900 available through HORIBA Instruments, Inc., Irvine, California, USA. Primary particle size was determined through the use of a scanning electron microscope (SEM). The particle size values discussed herein are based on the d50 measurements unless noted. A d50 measurement is an indication of a number median of a particle size distribution in that 50% of the particles would be expected to be smaller than the d50 measurement and 50% of the particles would be expected to be larger than the d50 measurement. Figure 1A is a micrograph of a commercially-available GCC slurry material, Hydrocarb^{®} 60, available through Omya, Inc., Proctor, Vermont, USA. The material of Figure 1A has a relatively large agglomerate particle size, on the order of 2 µm. Figure 1B is a micrograph of a commercially-available PCC slurry material, Opacarb^{®} A40, available through Minerals Technologies Inc., New York, New York, USA. The material of Figure 1B has an elongated or needle-like structure compared to the GCC material. Due to this anisotropy, the d50 value of 0.32 µm is not reflective of the particles' true primary particle dimensions of approximately 1 µm long by 0.2 µm wide as shown by SEM. The material of Figure 1C is a micrograph of a commercially-available PCC powder material, Multiflex-MM^{®}, also available through Minerals Technologies Inc., New York, New York, USA. The material of Figure 1C has an agglomerate particle size dimension of approximately 1.8 µm, though the primary particles are generally much smaller. Each of these materials, if used as received, would not result in a quality marking fluid receptor.

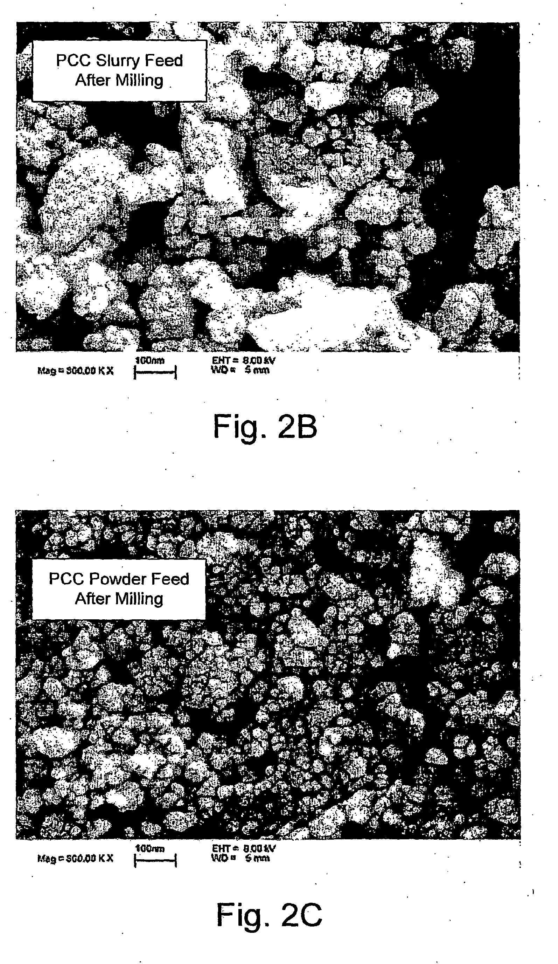

Figures 2A-2C are micrographs of the feed materials of Figures 1A-1C, respectively, after milling. Prior to milling, a slurry was formed of the PCC powder feed material of Figure 1C. The material of Figure 2A, the GCC slurry feed material after milling, shows a composite having small primary particles, of approximately 10nm, forming larger agglomerates, of approximately 100nm. The material of Figure 2B, the PCC slurry feed material after milling, shows a composite having agglomerates up to 120nm, with particles down to 20nm. The material of Figure 2C, the PCC powder feed material after forming a slurry and milling, shows a composite having agglomerates up to 50nm with particles down to 10nm. Each of the materials of Figures 2A-2C is capable of producing a glossy surface when coated on a substrate. In general, embodiments with lower agglomerate sizes will produce coated surfaces exhibiting higher gloss. However, packing of coated embodiments having lower agglomerate sizes can lead to a reduced propensity to absorb the carrier vehicle, thus increasing a likelihood of bleeding or running of the marking fluid.

To produce coating compositions in accordance with embodiments of the disclosure, the calcium carbonate feed material is milled to produce a distribution of particle sizes having a d50 value for primary particle size of less than 50nm. For some embodiments, the d50 value for primary particle size is in the range of 10-30nm. Coating compositions in accordance with embodiments of the disclosure further utilize controlled flocculation to form agglomerates of the primary particles. For some embodiments, the d50 value for particle size of the agglomerate is in the range of 50-200nm. Agglomerates of less than 200nm facilitate the production of transparent or translucent coating compositions, thereby providing a more desirable surface for receiving dye-based marking fluids and allowing the coating to be utilized on transparent substrates, such as overhead transparencies. Dyes absorbed into opaque receptive layers tend to appear washed out as the dye is absorbed into the opaque layer.

Tables 1A-1B contain data obtained from milling various calcium carbonate feed materials using a Lab Star Zeta™ bead mill available through NETZSCH-Feinmahltechnik Gmbh, Selb, Germany. The design of the Zeta™ mill incorporates a central shaft with pegs to agitate the beads radially while the slurry is re-circulated through the mill axially. Tests were conducted using 0.2mm and 0.1mm YTZ (yttrium stabilized zirconium) beads using an anionic dispersant. Tables 2A-2B contain data obtained from milling various calcium carbonate feed materials using a QC100 disc mill available through Union Process Inc., Akron, Ohio, USA. The design of the QC100 mill incorporates a rotating disc to accelerate the beads and slurry toward a screen, where the slurry exits for re-circulation while the beads migrate back to the inlet of the rotating disc. Tests were conducted using 0.3mm YTZ beads using an anionic dispersant. Each mill type produced similar results. Thus, it is expected that other milling processes could be utilized provided the particle sizes are achieved. Tables 1B and 2B include data for d50 values (Number Median) as well as Volume Median values for comparison.

**Table 1A**

| Agitated Bead Mill | | | | | | | |
|---|---|---|---|---|---|---|---|
| Batch # / Feed Material | Batch Size (kg) | Surfactant | Initial Solids (%) | Final Solids (%) | Initial Surfactant (%) | Final Surfactant (%) | Bead Size (mm) |
| #1 Hydrocarb^{®} 60 | 4.5 | Darvan^{®} C | 73 | 50.4 | 0.70 | 2.50 | 0.2 |
| #2 Hydrocarb^{®} 60 | 2 | Darvan^{®} C | 24.3 | 24.3 | 1.20 | 1.20 | 0.1 |
| #3 Multiflex-MM^{®} | 4.5 | Darvan^{®} C | 42.8 | 40 | 2.20 | 2.80 | 0.2 |
| #4 Multiflex-MM^{®} | 1.6 | Darvan^{®} C | 27 | 27 | 1.10 | 1.10 | 0.1 |
| #5 Multiflex-MM^{®} | 1.7 | Acumer^{®} 9300 | 26.4 | 26.4 | 1.76 | 3 | 0.1 |
| #6 Opacarb^{®} A40 | 4.5 | Darvan^{®} C | 43 | 43 | 0.00 | 1.60 | 0.2 |
| #7 Opacarb^{®} A40 | 1.6 | Acumer^{®} 9300 | 25.8 | 25 | 0.80 | 1.30 | 0.1 |

**Table 1B**

| Agitated Bead Mill (continued) | | | | | |
|---|---|---|---|---|---|
| Batch # / Feed Material | Final Viscosity | Final Temp (°C) | Final Vol Median (µm) | Final Num Median (µm) | Grind Time (minutes) |
| #1 Hydrocarb^{®} 60 | 2060cps | 50 | 0.193 | 0.107 | 120 |
| #2 Hydrocarb^{®} 60 | Fluid | 28 | 0.142 | 0.0907 | 270 |
| #3 Multiflex-MM^{®} | Paste | 60 | 0.138 | 0.073 | 180 |
| #4 Multiflex-MM^{®} | Paste | 27 | 0.128 | 0.0776 | 135 |
| #5 Multiflex-MM^{®} | 50cps | 62 | 0.082 | 0.071 | 150 |
| #6 Opacarb^{®} A40 | 2124cps | 58 | 0.174 | 0.076 | 90 |
| #7 Opacarb^{®} A40 | Paste | 31 | 0.1576 | 0.11 | 210 |

**Table 2A**

| Rotating Disc Bead Mill | | | | | | |
|---|---|---|---|---|---|---|
| Batch # / Feed Material | Batch Size (kg) | Surfactant | Initial Solids (%) | Initial Surfactant (%) | Final Surfactant (%) | Bead Size (mm) |
| #1 Hydrocarb^{®} 60 | 4 | Acumer^{®} 9300 | 40 | 1.00 | 12.50 | 0.3 |
| #2 Multiflex-MM^{®} | 4 | Acumer^{®} 9300 | 40 | 1.00 | 12.50 | 0.3 |

**Table 2B**

| Rotating Disc Bead Mill (continued) | | | | | |
|---|---|---|---|---|---|
| Batch # / Feed Material | Final Viscosity | Final Temp (°C) | Final Vol Median (µm) | Final Num Median (µm) | Grind Time (minutes) |
| #1 Hydrocarb^{®} 60 | Paste | 60+ | 0.193 | 0.093 | 300 |
| #2 Multiflex-MM^{®} | Paste | 60+ | 0.126 | 0.08 | 180 |

The dispersants or surfactants utilized for the examples of Tahles 1A-1B and 2A-2B are polyacrylate salt (Acumer^{®} 9300) or polymethacrylate salt (Darvan^{®} C) dispersants. Such polyelectrolyte dispersants have a high charge density and, therefore, have both charge and steric components of stabilization of the slurry flocculation. Other examples of suitable dispersants may include sodium tripolyphosphates. Darvan^{®} C is available through R.T. Vanderbilt Company, Inc., Norwalk, Connection, USA. Acumer^{®} 9300 is available through Rohm and Haas Company, Philadelphia, Pennsylvania, USA.

The amount of surfactant is an amount not sufficient to satisfy the surfactant demand. In a milling process, as new surfaces are generated, surfactant may be added to the dispersion to reduce the interfacial energy of the solid/liquid interface or the energy of the system would increase and the particles would flocculate to reduce the energy of the system. Thus, surfactant is added to reduce the interfacial energy and also physically separate the particles to reduce flocculation. If there is sufficient surfactant to cover and keep the resultant particles separate, the surfactant demand of the system is met, otherwise, the surfactant demand is not met. Agglomeration due to reduced levels of surfactant frequently leads to increased viscosity. Surfactant may be added to a system to reduce the viscosity, but will generally only reduce the viscosity to some minima of the system. The surfactant level required for reaching the minima is the surfactant demand.

By maintaining the surfactant amount at some level below the demand, agglomeration and viscosity build is encouraged. For some embodiments, the slurries include surfactant at levels of 2-5% of solids loading. For further embodiments, the slurries include surfactant at a level of 3%. In this manner, the ground material will be flocculated during and after the milling process if all the surfactant is used up and no additional surfactant is available for stabilization. The floc size during the milling process is controlled by the size of the beads or other grinding media, which controls the number and area of contact. Depletion of surfactant during the milling cycle may also contribute to post-milling flocculation and the ultimate floc structure. Once the energy of milling is removed, if there is an insufficient amount of dispersant to meet demand, the particles will continue to agglomerate to reach an energy level minima.

Once milled, the calcium carbonate may be combined with binders for coating onto a substrate. Common binders for printing applications include polyurethane binders; latex binders, such as acrylates, methacrylics and methacrylates, styrene-butadiene copolymers and polyvinyl acetates, ethylene-polyvinylacetates and styrene-acrylic(acrylates, methacrylates, methacrylics) co-polymers and co-polymers thereof; and water-soluble binders, such as PVA, PVP, Cellulose, starch etc.

For one embodiment, a ratio of calcium carbonate dispersion to binder may be approximately 85:15 based on solids content of the dispersion. However, the ratio of dispersion to binder is not critical and may, for example, be in the range of 80:20 to 95:5. In general, lower binder content increases the likelihood of cracking of the resulting coating while higher binder content increases the resistance to penetration of the marking fluid.

The various embodiments may contain additives that do not materially affect the basic and novel properties of the dispersions disclosed herein. For example, coating compositions could further include coating aids, mordents and/or dye fixatives, as well as cross-linking agents when the binder used is cross-linkable. Further examples may include colorants, optical brighteners, defoamers, antifoams, plastic pigments, co-pigments such as silica, alumina, calcium carbonate, kaolin clay, titanium dioxide, calcined clay, aluminum trihydrate, barium sulfate, aluminum silicates, zinc oxide and/or talc.

The percent solids of the calcium carbonate dispersions in accordance with embodiments of the disclosure is generally a function of the capabilities of the milling equipment and the pigment water demand, but higher solids concentrations will facilitate improved coating efficiencies as lesser amounts of water or other carrier need to be removed after coating, thus allowing faster drying times and faster web speeds.

Coating compositions formed of the calcium carbonate dispersions in accordance with embodiments of the disclosure may be applied to a variety of substrates. For example, such coating compositions could be applied to paper bases, resin coated paper, or clear or opaque films. The coating compositions could be directly coated onto the substrate. Optionally, a base layer of some other composition could first be applied to the substrate and a coating composition in accordance with an embodiment of the disclosure could be coating onto the base layer. For example, paper substrates may benefit by such a base coating layer as it could lead to smoother top coatings, thus providing higher gloss. Examples of base layer coatings may include coatings having silica, alumina, calcium carbonate, kaolin clay, titanium dioxide, calcined clay, aluminum trihydrate, barium sulfate, aluminum silicates, zinc oxide and/or talc, combined with a binder and optional additives. Examples of binders and other components follow generally the same guidance as provided with binders and other components described in relation to embodiments of the disclosure.

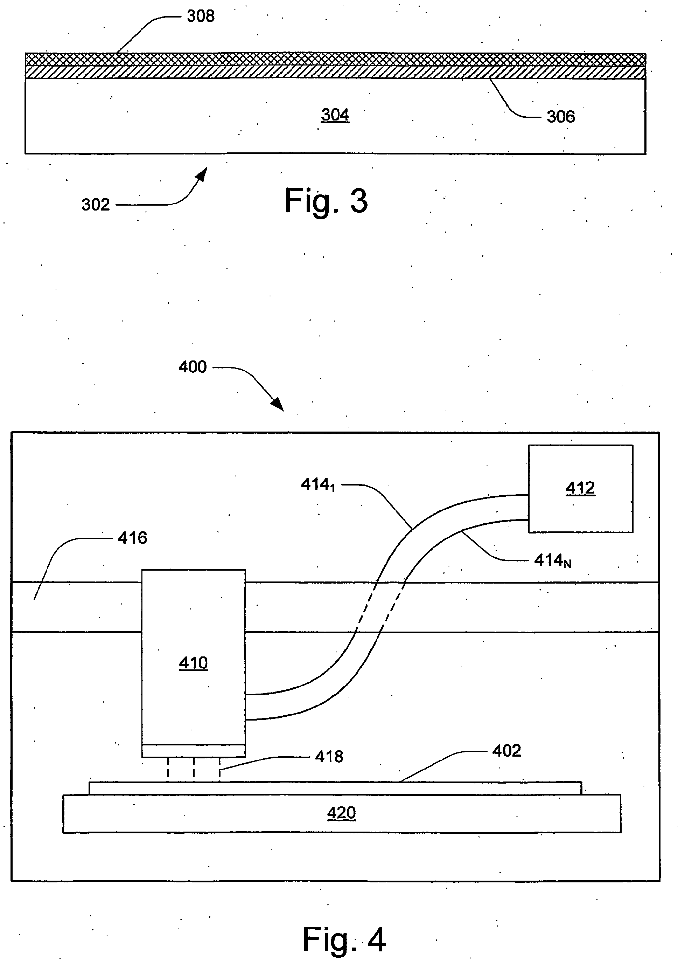

Figure 3 is a cross sectional view of a print media 302 in accordance with an embodiment of the disclosure. The embodiment depicted in Figure 3 includes a substrate 304, an optional overlying base coat layer 306 and an overlying calcium carbonate layer 308 in accordance with an embodiment of the disclosure. Substrate 304 may be any of a variety of substrates. Some examples of substrate 304 include paper, resin-coated paper or clear film. The optional base coat layer 306 is applied to a surface of the substrate 304. The calcium carbonate layer 308 in accordance with an embodiment of the disclosure is applied to a surface of the base coat layer 306. In the absence of the optional base coat layer 306, the calcium carbonate layer 308 would be applied to the surface of the substrate 304. Application of the optional base coat layer 306 and the calcium carbonate layer 308 may be performed using any of a variety of manufacturing techniques, such as, but not limited to, blade, rod, jet, airknife, roll, curtain and slot coating operations. Such coatings may be applied in a single layer, or may involve more than one layer of the coating material.

Figure 4 illustrates an imaging device 400, such as an inkjet printer, for demonstrating another embodiment of the disclosure. Imaging device 400 has a fluid handling system that includes a fluid-ejection device 410, such as an inkjet print head, fluidly coupled to a marking fluid reservoir 412, e.g., an ink reservoir, by one or more conduits 414. Alternatively, the fluid-ejection device 410 may include an integral marking fluid reservoir without the need for an external supply, such as is common with inkjet pens. Fluid-ejection device 410 may be movably attached to a rail or other support 416, allowing it to move relative to the media 402. Fluid-ejection device 410 can eject marking fluid droplets 418, such as ink droplets, onto the media 402, as fluid-ejection device 410 moves across media 402. The media 402 includes a calcium carbonate coating in accordance with an embodiment of the disclosure. The media 402 may be stationary or movable on a support 420. Where the media 402 is movable, it typically travels in a direction orthogonal to the support 416 of the fluid-ejection device 410. As the droplets 418 are ejected onto the calcium carbonate coating of the media 402, an image is formed on a surface of the media 402.

## Claims

1. A marking fluid receptive coating (308), comprising:
ground calcium carbonate;
wherein the ground calcium carbonate forms agglomerates having a d50 value for agglomerate particle size of less than 200nm.

2. The marking fluid receptive coating (308) of claim 1, wherein the agglomerates are formed of primary particles of calcium carbonate having a d50 value for particle size of less than 50nm.

3. The marking fluid receptive coating (308) of claim 2, wherein the agglomerates have a d50 value for agglomerate particle size in the range of 50-200nm and the primary particles have a d50 value for particle size in the range of 10-30nm.

4. The marking fluid receptive coating (308) of claim 2 or 3, wherein the marking fluid receptive coating (308) is overlying a substrate (304) to form a print media (302).

5. A method of forming a marking fluid receptive coating (308) composition, comprising:
mining a calcium carbonate feed material in a dispersion;
adding an amount of surfactant to the dispersion that is at a level less than a surfactant demand of the dispersion; and
combining the milled dispersion with a binder.

6. The method of claim 5, wherein milling a calcium carbonate feed material further comprises milling the calcium carbonate feed material to have a d50 value for primary particle size of less than 50nm.

7. The method of claim 5, wherein milling a calcium carbonate feed material further comprises milling the calcium carbonate feed material to have a d50 value for primary particle size in the range of 10-30nm.

8. The method of any of claims 5, 6 or 7, wherein adding an amount of surfactant to the dispersion that is at a level less than a surfactant demand of the dispersion further comprises adding an amount of surfactant in the range of 2-5% of a solids content of the dispersion.

9. The method of any of claims 5, 6 or 7, wherein adding an amount of surfactant to the dispersion that is at a level less than a surfactant demand of the dispersion further comprises adding an amount of surfactant sufficient to form agglomerates of calcium carbonate having a d50 value for agglomerate particle size of less than 200nm.

10. The method of any of claims 5, 6 or 7, wherein adding an amount of surfactant to the dispersion that is at a level less than a surfactant demand of the dispersion further comprises adding an amount of surfactant sufficient to form agglomerates of calcium carbonate having a d50 value for agglomerate particle size in the range of 50-200nm.

## Patentansprüche

1. Eine markierungsfluidaufnahmefähige Beschichtung (308), die folgende Merkmale umfasst:
gemahlenes Calciumcarbonat;
wobei das gemahlene Calciumcarbonat Agglomerate mit einem d50-Wert für eine Agglomeratpartikelgröße von weniger als 200 nm bildet.

2. Die markierungsfluidaufnahmefähige Beschichtung (308) gemäß Anspruch 1, bei der die Agglomerate aus Primärpartikeln aus Calciumcarbonat mit einem d50-Wert für eine Partikelgröße von weniger als 50 nm gebildet sind.

3. Die markierungsfluidaufnahmefähige Beschichtung (308) gemäß Anspruch 2, bei der die Agglomerate einen d50-Wert für eine Agglomeratpartikelgröße in dem Bereich von 50-200 nm aufweisen, und die Primärpartikel einen d50-Wert für eine Partikelgröße in dem Bereich von 10-30 nm aufweisen.

4. Die markierungsfluidaufnahmefähige Beschichtung (308) gemäß Anspruch 2 oder 3, bei der die markierungsfluidaufnahmefähige Beschichtung (308) ein Substrat (304) überlagert, um ein Druckmedium (302) zu bilden.

5. Ein Verfahren zum Bilden einer Zusammensetzung einer markierungsfluidaufnahmefähigen Beschichtung (308), das folgende Schritte umfasst:
Mahlen eines Calciumcarbonatzuführmaterials in einer Dispersion;
Hinzufügen einer Menge an oberflächenaktivem Mittel zu der Dispersion, die auf einem Pegel ist, der geringer ist als ein Bedarf der Dispersion an oberflächenaktivem Mittel; und
Kombinieren der gemahlenen Dispersion mit einem Bindemittel.

6. Das Verfahren gemäß Anspruch 5, bei dem das Mahlen eines Calciumcarbonatzuführmaterials ferner das Mahlen des Calciumcarbonatzuführmaterials umfasst, damit dasselbe einen d50-Wert für eine Primärpartikelgröße von weniger als 50 nm aufweist.

7. Das Verfahren gemäß Anspruch 5, bei dem das Mahlen eines Calciumcarbonatzuführmaterials ferner das Mahlen des Calciumcarbonatzuführmaterials umfasst, damit dasselbe einen d50-Wert für eine Primärpartikelgröße in dem Bereich von 10-30 nm aufweist.

8. Das Verfahren gemäß einem der Ansprüche 5, 6 oder 7, bei dem das Hinzufügen einer Menge an oberflächenaktivem Mittel zu der Dispersion, die auf einem Pegel ist, der geringer ist als ein Bedarf der Dispersion an oberflächenaktivem Mittel, ferner das Hinzufügen einer Menge an oberflächenaktivem Mittel in dem Bereich von 2 bis 5% eines Feststoffgehalts der Dispersion umfasst.

9. Das Verfahren gemäß einem der Ansprüche 5, 6 oder 7, bei dem das Hinzufügen einer Menge an oberflächenaktivem Mittel zu der Dispersion, die auf einem Pegel ist, der geringer ist als ein Bedarf der Dispersion an oberflächenaktivem Mittel, ferner das Hinzufügen einer Menge an oberflächenaktivem Mittel umfasst, die ausreicht, um Agglomerate aus Calciumcarbonat mit einem d50-Wert für eine Agglomeratpartikelgröße von weniger als 200 nm zu bilden.

10. Das Verfahren gemäß einem der Ansprüche 5, 6 oder 7, bei dem das Hinzufügen einer Menge an oberflächenaktivem Mittel zu der Dispersion, die auf einem Pegel ist, der geringer ist als ein Bedarf der Dispersion an oberflächenaktivem Mittel, ferner das Hinzufügen einer Menge an oberflächenaktivem Mittel umfasst, die ausreicht, um Agglomerate aus Calciumcarbonat mit einem d50-Wert für eine Agglomeratpartikelgröße in dem Bereich von 50-200 nm zu bilden.

## Revendications

1. Revêtement récepteur de fluide de marquage (308), comprenant :
du carbonate de calcium broyé ;
dans lequel le carbonate de calcium broyé forme des agglomérats dont la valeur d50 de la taille des particules d'agglomérat est inférieure à 200 nm.

2. Revêtement récepteur de fluide de marquage (308) selon la revendication 1, dans lequel les agglomérats sont formés de particules primaires de carbonate de calcium dont la valeur d50 de la taille des particules est inférieure à 50 nm.

3. Revêtement récepteur de fluide de marquage (308) selon la revendication 2, dans lequel les agglomérats ont une valeur d50 de la taille des particules d'agglomérat dans la plage de 50-200 nm et les particules primaires ont une valeur d50 de la taille des particules dans la plage de 10-30 nm.

4. Revêtement récepteur de fluide de marquage (308) selon la revendication 2 ou 3, dans lequel le revêtement récepteur de fluide de marquage (308) recouvre un substrat (304) pour former un support d'impression (302).

5. Procédé de formation d'une composition de revêtement récepteur de fluide de marquage (308), comprenant les étapes consistant à :
■ broyer un matériau de charge d'alimentation de carbonate de calcium dans une dispersion ;
■ ajouter à la dispersion une quantité de tensioactif qui est inférieure à la demande en tensioactif de la dispersion ; et
■ combiner la dispersion broyée avec un liant.

6. Procédé selon la revendication 5, dans lequel le broyage du matériau de charge d'alimentation de carbonate de calcium comprend en outre le broyage du matériau de charge d'alimentation de carbonate de calcium de manière à avoir une valeur d50 de la taille des particules primaires inférieure à 50 nm.

7. Procédé selon la revendication 5, dans lequel le broyage du matériau de charge d'alimentation de carbonate de calcium comprend en outre le broyage du matériau de charge d'alimentation de carbonate de calcium de manière à avoir une valeur d50 de la taille des particules primaires dans la plage de 10-30 nm.

8. Procédé selon l'une quelconque des revendications 5, 6 ou 7, dans lequel l'addition à la dispersion d'une quantité de tensioactif à un niveau inférieur à la demande en tensioactif de la dispersion comprend en outre l'addition d'une quantité de tensioactif à raison de 2-5% de la teneur en matières solides de la dispersion.

9. Procédé selon l'une quelconque des revendications 5, 6 ou 7, dans lequel l'addition à la dispersion d'une quantité de tensioactif à un niveau inférieur à la demande en tensioactif de la dispersion comprend en outre l'addition d'une quantité de tensioactif suffisante pour former des agglomérats de carbonate de calcium dont la valeur d50 de la taille des particules d'agglomérat est inférieure à 200 nm.

10. Procédé selon l'une quelconque des revendications 5, 6 ou 7, dans lequel l'addition à la dispersion d'une quantité de tensioactif à un niveau inférieur à la demande en tensioactif de la dispersion comprend en outre l'addition d'une quantité de tensioactif suffisante pour former des agglomérats de carbonate de calcium dont la valeur d50 de la taille des particules d'agglomérat est sur la plage de 50-200 nm.
